# FASCICULE DE BREVET EUROPEEN

(11) **EP 3 274 260 B1**
(45) Date de publication et mention de la délivrance du brevet: **07.08.2019**
(21) Numéro de dépôt: 16717419.2
(22) Date de dépôt: 21.03.2016
(51) Int. Cl.: B65B 3/12, B65B 3/32, B65B 37/06, B67C 3/20, G01F 11/02, G01F 11/16, G01F 15/00

(54) **DISPOSITIF DE DOSAGE VOLUMETRIQUE POUR MACHINE DE REMPLISSAGE DE RECIPIENTS**
VOLUMETRISCHE DOSIERVORRICHTUNG FÜR BEHÄLTERFÜLLMASCHINE
VOLUMETRIC METERING DEVICE FOR CONTAINER FILLING MACHINE

(30) Priorité: 23.03.2015 FR 1552369
(43) Date de publication de la demande: 31.01.2018
(73) Titulaire: Hema, 29000 Quimper (FR)
(72) Inventeur: MACQUET, Philippe, 29000 Quimper (FR); BELLEC, Caroline, 29000 Quimper (FR); LABASQUE, Jean-Baptiste, 29000 Quimper (FR); LIGEN, Erwan, 29000 Quimper (FR)
(74) Mandataire: Novagraaf Technologies
(86) Numéro de dépôt international: PCT/FR2016/050617
(87) Numéro de publication internationale: WO 2016/151227

(56) Documents cités:
- EP-A1- 0 379 102
- EP-A1- 0 414 075
- FR-A1- 2 421 287
- US-A- 3 830 264
- US-A- 3 949 791
- US-A- 5 494 194
- US-A- 5 992 695
- US-A1- 2012 261 441

## Description

La présente invention concerne un dispositif de dosage pour machine de remplissage de récipients par un produit. Plus particulièrement, la présente invention concerne un dispositif de dosage pour une machine de remplissage de récipients comprenant une chambre de dosage à piston, dont le piston est muni d'une ouverture centrale.

De manière classique, les machines de remplissage de récipients sont équipées de dispositifs de dosage. Certains de ces dispositifs de dosage sont agencés pour permettre un dosage volumétrique, en particulier au moyen d'une chambre de dosage. Le volume de produit dosé pour remplir chaque récipient correspond au volume de produit déplacé dans cette chambre sur la longueur de déplacement du piston dans cette chambre.

Un exemple de ces dispositifs de dosage est divulgué dans le document EP0443888. Dans celui-ci, la chambre de dosage est formée par un corps de cylindre, à l'intérieur duquel peut se déplacer un piston. En haut de cette chambre est aménagée une ouverture d'admission du produit à doser, et en bas est aménagée une ouverture de refoulement, par laquelle le produit dosé sera expulsé de la chambre de dosage. Ce piston comprend une ouverture centrale, qui peut être obturée ou ouverte par un clapet. Lors du déplacement du piston vers le haut, le clapet est en position d'ouverture, le liquide peut ainsi passer au travers de l'ouverture. Lorsque suffisamment de produit a été transféré entre le piston et l'ouverture de refoulement, le clapet est fermé et le piston descend, entraînant le refoulement du produit par l'ouverture de refoulement, afin de remplir le récipient. L'avantage d'un tel dispositif est de permettre un gain de temps car l'aspiration du produit dans la chambre de dosage a lieu en même temps que le refoulement du produit hors de celle-ci.

Cependant dans le dispositif du document EP0443888, afin de coordonner la fermeture et l'ouverture du clapet et les mouvements du piston, les moyens d'actionnement du clapet et les moyens d'actionnement du piston sont distincts. Le fonctionnement est synchronisé par un dispositif de synchronisation. Il s'ensuit que le système est complexe et coûteux à mettre en oeuvre.

Le problème technique que vise à résoudre l'invention est donc de réaliser un dispositif de dosage plus simple, tout en ayant une bonne cadence de remplissage de récipients, comparé à l'art antérieur.

Le document US5992695 divulgue un dispositif de dosage dans lequel c'est l'actionnement du clapet par une tige dans un sens ou dans l'autre, qui actionne directement le piston.

A l'effet de résoudre ledit problème technique, un premier objet de l'invention est un dispositif de dosage selon la revendication 1.

Ainsi, l'actionnement du clapet dans un sens ou dans l'autre, actionnera directement le piston. Ou bien alternativement, l'actionnement du piston dans un sens ou dans l'autre actionnera directement le clapet.

De ce fait, seul un dispositif d'actionnement, celui actionnant le clapet ou bien celui actionnant le piston, est utilisé pour actionner à la fois le piston et le clapet. Aucun dispositif de synchronisation n'est requis. Ce système est donc simplifié et moins coûteux, tout en ayant une bonne cadence puisque l'aspiration dans la chambre de dosage est réalisée dans le même temps que le dosage du produit.

La réalisation du piston du dispositif selon l'invention est également simplifiée car le clapet porte les moyens d'entraînement.

L'invention peut optionnellement présenter une ou plusieurs des caractéristiques suivantes :
- le passage du piston est un trou traversant, notamment central ; il s'agit d'une forme simple de réalisation d'un passage ; cela permet également au produit de passer plus facilement au travers de ce passage, notamment dans le cas d'un produit liquide comprenant des morceaux, par exemple une compote avec morceaux de fruits ;
- les moyens d'entrainement comprennent :
   - une butée supérieure située du côté du compartiment d'alimentation, et agencée de manière à pouvoir entrer en contact avec le piston du côté du compartiment d'alimentation lorsque le clapet est actionné selon le sens de refoulement,
   - une butée inférieure située du côté du compartiment de dosage, et agencée de manière à pouvoir entrer en contact avec le piston du côté du compartiment de dosage lorsque le clapet est actionné selon le sens de transfert,
   - une portion de liaison reliant entre elles ces butées inférieure et supérieure, et traversant ledit trou traversant ;
   cela permet une réalisation simple de l'entrainement du piston par le clapet, ou selon une variante de réalisation de l'entrainement du clapet par le piston, dans un sens et dans l'autre, le long du corps de cylindre ;
- la butée supérieure est agencée de manière à fermer le passage, notamment le trou traversant, lorsqu'elle vient en contact avec ledit piston ; ainsi le début du déplacement du piston pour le refoulement est concomitant avec la fermeture du passage ;
- la butée supérieure présente une forme tronconique apte à venir en contact avec les bords du trou traversant ; cela permet un ajustement de la fermeture aux bords du trou traversant ;
- les bords dudit trou traversant du côté du compartiment d'alimentation forment un siège tronconique de forme complémentaire à ladite butée supérieure ; l'ajustement est ainsi amélioré ;
- la portion de liaison comprend un passage dans le clapet, ce dernier étant agencé de manière à ce que d'une part lorsque la butée inférieure est contre le piston, le passage dans le clapet communique d'un côté avec le compartiment d'alimentation par un espace entre les deux butées, et de l'autre côté avec le compartiment de dosage, et d'autre part lorsque la butée supérieure est contre le piston, la portion de liaison est isolée du compartiment d'alimentation par la butée supérieure ; ainsi dans cette dernière situation le passage dans le clapet ne communique plus avec le compartiment d'alimentation ;
- la portion de liaison comprend un passage avec une ouverture d'entrée et une ouverture de sortie situées de part et d'autre de la butée inférieure, l'ouverture d'entrée étant située entre la butée supérieure et la butée inférieure, le clapet étant agencé de manière à ce que lorsque la butée inférieure est en contact avec le piston, l'ouverture d'entrée débouche dans le compartiment d'alimentation ; ainsi lorsque la butée supérieure est en contact avec le piston, l'ouverture d'entrée n'est pas accessible, puisqu'en deçà de la fermeture du trou traversant par la butée supérieure ; en revanche lorsque la butée inférieure est en contact avec le clapet, cette ouverture d'entrée est accessible dans le compartiment d'alimentation ; dans cette dernière situation, le produit peut circuler d'un compartiment à l'autre par le passage à l'intérieur de la portion de liaison ; cela permet un agencement plus simple du clapet au travers du trou traversant du piston ; de plus cela permet de simplifier la réalisation du piston, en reportant le calibrage du conduit permettant le passage d'un compartiment à l'autre sur le passage contenu dans la portion de liaison ;
- la portion de liaison est cylindrique, notamment selon un axe longitudinal parallèle à l'axe longitudinal du corps de cylindre, notamment coaxial avec ce dernier ; cela permet de réaliser simplement cette portion de liaison ;
- le passage dans la portion de liaison peut comprendre un conduit longitudinal et un conduit transversal, le conduit longitudinal débouchant d'un côté par ladite ouverture de sortie et de l'autre se reliant à un côté du conduit transversal, l'autre côté du conduit transversal débouchant par ladite ouverture d'entrée ; le conduit transversal est dit transversal car non parallèle avec le conduit longitudinal ; le conduit longitudinal est notamment parallèle à l'axe longitudinal du corps de cylindre;

- le passage dans la portion de liaison comprend une deuxième ouverture d'entrée située entre la butée supérieure et la butée inférieure, le clapet étant agencé de manière à ce que lorsque la butée inférieure est en contact avec le piston, la deuxième ouverture d'entrée débouche dans le compartiment d'alimentation, la portion de liaison comprenant un deuxième conduit transversal débouchant d'un côté par cette deuxième ouverture d'entrée et se reliant de l'autre au conduit longitudinal ; cela permet de faciliter davantage le transfert du produit dans le compartiment de dosage ;
- les deux conduits transversaux et le conduit longitudinal se joignent en une jonction en « Y » ; c'est une forme simple de réalisation et plus efficace car elle permet l'arrivée du produit dans le passage dans la portion de liaison de part et d'autre de cette dernière ;
- le conduit longitudinal et le ou les conduits transversaux sont cylindriques et présentent des sections circulaires de diamètres identiques ; cela permet un écoulement plus fluide du produit vers le compartiment de dosage ;
- le diamètre des conduits transversaux et longitudinaux est égal à la distance de la butée supérieure à la paroi du corps de cylindre dans un plan transversal passant par l'endroit transversalement le plus large de la butée supérieure ; ainsi la largeur disponible pour le trajet du produit au niveau du clapet et du piston est constante de la butée supérieure à la sortie du passage au travers de la portion de liaison ;
- le trou traversant est centré sur le piston et éventuellement la portion de liaison comprend deux conduits transversaux comme décrit précédemment ; une telle réalisation permet une distribution meilleure autour du trou traversant ; dans ce cas, selon un exemple de réalisation, le diamètre des conduits transversaux et longitudinaux peut être voisin du tiers de la valeur du diamètre du corps de cylindre ;
- si on considère l'écart, dit écart de butée supérieure, entre le diamètre de la butée supérieure au niveau de son point le plus large et le diamètre desdits conduits, le diamètre desdits conduits est égal à un tiers de la différence entre le diamètre du corps de cylindre et cet écart de butée supérieure ;
- le trou traversant est excentré sur le piston ; en d'autres termes le centre du trou traversant est décalé par rapport au centre du piston ; on peut de plus n'avoir qu'un seul conduit transversal ; dans ce cas, selon un exemple de réalisation, le diamètre des conduits transversaux et longitudinaux peut être supérieur au tiers de la valeur du diamètre du corps de cylindre, et approcher de la moitié du diamètre du corps de cylindre ; il est donc possible de faire passer un produit contenant des morceaux plus gros ;
- dans, le cas de l'alinéa précédent, si on considère l'écart, dit écart de butée supérieure, entre le diamètre de la butée supérieure au niveau de son point le plus large et le diamètre desdits conduits, le diamètre desdits conduits est égal à la moitié de la différence entre le diamètre du corps de cylindre et cet écart de butée supérieure ;
- la portion de liaison est formée venue de matière en une seule pièce avec la butée inférieure ; cela permet une réalisation simple de cette partie du clapet ;
- le clapet comprend une pièce de fermeture comprenant ladite butée supérieure, ladite pièce de fermeture comprenant également un moyen de fixation de ladite portion de liaison à cette pièce de fermeture ; cela permet de réaliser le clapet de façon simple ; c'est d'autant plus intéressant selon une réalisation de l'invention où la butée supérieure et la butée inférieure sont tronconiques, chaque butée venant en appui sur toute la périphérie du bord du trou traversant situé du côté de la butée correspondante ;
- le clapet comprend un joint annulaire entre ladite portion de liaison et ladite pièce de fermeture, agencé de manière à assurer l'étanchéité autour dudit moyen de fixation ;
- le clapet et la portion de liaison sont fixés l'un à l'autre par soudure laser ; cela est davantage hygiénique ;
- le piston comprend des bords périphériques agencés de manière à ce que le déplacement du piston soit guidé par les parois du corps de cylindre ; cela permet de réaliser de façon simple les moyens de guidage du piston ; notamment les bords périphériques du piston peuvent être agencés de manière à ce que le déplacement du piston soit uniquement guidé par les parois du corps de cylindre, ceci simplifiant davantage la réalisation du piston et de ses moyens de guidage ;
- le dispositif de dosage comprend au moins un joint disposé autour du piston de manière à assurer l'étanchéité entre le piston et les parois du corps de cylindre, et des dispositifs de guidage entre le piston et les parois interne du corps de cylindre afin de positionner et guider le piston pour assurer l'étanchéité du joint;
- le piston est agencé pour être essentiellement guidé par les parois du corps de cylindre ; cette réalisation est de plus simple à réaliser ;
- le piston comprend au moins du côté du compartiment d'alimentation une zone en forme d'entonnoir se rétrécissant vers, notamment jusqu'à, l'entrée du passage dans le piston ; cela permet un écoulement plus rapide du produit jusqu'à l'ouverture d'entrée du passage dans le piston ; cela permet également un renforcement de l'hygiène, le produit pouvant s'écouler naturellement ;
- l'angle d'ouverture de la forme en entonnoir est agencé de manière à ce que selon une section longitudinale passant par le centre du conduit transversal de la portion de liaison, la plus courte distance entre la paroi de la forme en entonnoir et la partie supérieure du conduit transversal a la même valeur que le diamètre du conduit longitudinal ; cela permet à un morceau d'être guidé depuis la forme en entonnoir jusqu'au passage du clapet, pour passer à travers celui-ci lors de son déplacement dans le sens de transfert ;
- le piston a une forme annulaire ; le piston peut par exemple être un solide de révolution, l'axe de révolution étant notamment l'axe longitudinal du corps de cylindre ; on a ainsi une forme très simple, pouvant facilement être obtenue par moulage ou par usinage ;
- le clapet comprend un matériau magnétique, et les moyens de déplacement du clapet comprennent des moyens de génération d'une variation d'un champ magnétique agencés de manière à entrainer le déplacement de l'aimant par variation du champ magnétique le long du corps de cylindre de manière à entrainer le déplacement du clapet ; ainsi le corps de cylindre pourra être dépourvu de toute tige d'actionnement, et donc également d'orifice traversé par une telle tige ; ceci permet d'améliorer encore davantage l'étanchéité et l'hygiène du dispositif ; le matériau magnétique pourra être par exemple un pièce supplémentaire ou le matériau constituant partie ou totalité du clapet, par exemple la bague et/ou la pièce de liaison ;
- lesdits moyens de génération d'une variation d'un champ magnétique comprennent un aimant à l'extérieur de la chambre de dosage et des moyens de déplacement de cet aimant le long du corps de cylindre, le déplacement de cet aimant entrainant la variation dudit champs magnétique permettant le déplacement du clapet ;
- alternativement à l'alinéa précédent, lesdits moyens de génération d'une variation d'un champ magnétique comprennent un moteur linéaire générant un champ magnétique, ledit moteur linéaire étant disposé le long du corps de cylindre, notamment autour, afin d'entrainer directement le clapet ;
- selon des variantes de réalisation des trois alinéas précédent c'est le piston qui comprend un matériau magnétique, les moyens de génération d'une variation de champ magnétique entrainant le déplacement du piston, qui entraine le déplacement du clapet via lesdits moyens d'entrainement, notamment les butées inférieure et supérieure ;
- la chambre de dosage ne comprend que deux orifices communiquant avec l'extérieur de la chambre de dosage : un orifice d'admission de liquide dans la chambre de dosage et un orifice de refoulement du liquide hors de la chambre de dosage.

Un autre objet de l'invention est une machine de remplissage de récipients comprenant des postes de dosage, chaque poste de dosage comprenant un dispositif de dosage selon la présente invention.

Selon un exemple de réalisation, la machine de remplissage selon l'invention comprend un carrousel apte à supporter des récipients, les postes de dosages étant répartis radialement, les moyens de déplacement des clapets de ces postes de dosage comprenant un moteur électrique pour actionner le déplacement du clapet correspondant, cette machine étant agencée de manière à ce que le remplissage des récipients puisse se faire sur un parcours de récipient correspondant à un secteur angulaire par rapport à l'axe de rotation du carrousel supérieur à 180°, notamment supérieur à 270°.

Cette machine de remplissage permet ainsi d'avoir un angle de dosage plus grand pour chaque récipient entre son arrivée sur le carrousel et son départ de celui-ci, le temps d'aspiration du produit étant réalisé en même temps que le temps de refoulement, puis suivi par un temps de transfert rapide. Ainsi, on pourra augmenter la vitesse de rotation du carrousel tout en conservant la même durée de remplissage par récipient. De ce fait, cela permettra de diminuer le nombre de postes de remplissage, tout en conservant la même cadence de nombre de récipients remplis par cette machine. La machine selon l'invention permet donc un gain en terme de ratio nombre de postes de remplissage / cadence de récipients remplis par rapport à une machine de remplissage classique avec une rampe de roulements de galets d'actionnement des pistons.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une coupe verticale longitudinale d'un dispositif de dosage selon un premier mode de réalisation ;
- la figure 2 est une vue en perspective de dessus d'un piston et d'un clapet du dispositif de la figure 1 ou 4;
- la figure 3a est une coupe verticale longitudinale de la figure 2 selon un plan passant par l'axe BB' et par l'axe longitudinal A, le clapet étant en position d'ouverture;
- la figure 3b correspond à la coupe de la figure 3a mais avec le clapet en position de fermeture ;
- la figure 4 est une coupe verticale longitudinale d'un dispositif de dosage selon le premier mode de réalisation, selon une variante de réalisation par rapport à la figure 1, avec un manchon formant une chambre de nettoyage, monté entre la chambre de dosage et la buse ;
- la figure 5 est une vue en perspective de dessus d'un piston et d'un clapet selon un deuxième mode de réalisation d'un dispositif de dosage;
- la figure 6a est une coupe verticale longitudinale de la figure 5 selon un plan passant par l'axe CC' et par l'axe longitudinal A, le clapet étant en position d'ouverture;
- la figure 6b correspond à la coupe de la figure 6a mais avec le clapet en position de fermeture ;
- la figure 7 divulgue un troisième mode de réalisation dont les moyens de déplacement du clapet diffèrent du dispositif de dosage illustré en figure 4 ;
- la figure 8 divulgue un quatrième mode de réalisation dont les moyens de déplacement du clapet diffèrent du dispositif de dosage illustré en figure 4 et 7 ;
- la figure 9 illustre une machine de remplissage pour un dispositif selon l'invention.

Selon un premier mode de réalisation, le dispositif de dosage 1 comprend une chambre de dosage 4, dont le volume est délimité par la paroi d'un corps de cylindre 2. Ce corps de cylindre admet un axe longitudinal A, s'étendant selon la longueur de ce corps de cylindre 2 ; notamment, il correspond à l'axe du cylindre définit par les parois internes latérales du corps de cylindre 2.

Cette chambre de dosage 4 comprend un orifice d'admission 5 relié par une conduite 50 à une cuve (non représentée). A l'autre extrémité du corps de cylindre 2, la chambre de dosage comprend un orifice de refoulement 6 relié à une buse 40.

A l'intérieur de la chambre de dosage 4, un piston 10 sépare cette chambre de dosage en deux compartiments :
- un compartiment d'alimentation 8 au-dessus du piston 10 et dans lequel débouche l'orifice d'admission 5, et
- un compartiment de dosage 9 au-dessous du piston 10 et duquel débouche l'orifice de refoulement 6.

Ce piston 10 comprend un passage 12, formé par exemple par un trou traversant, reliant le compartiment d'alimentation 8 au compartiment de dosage 9.

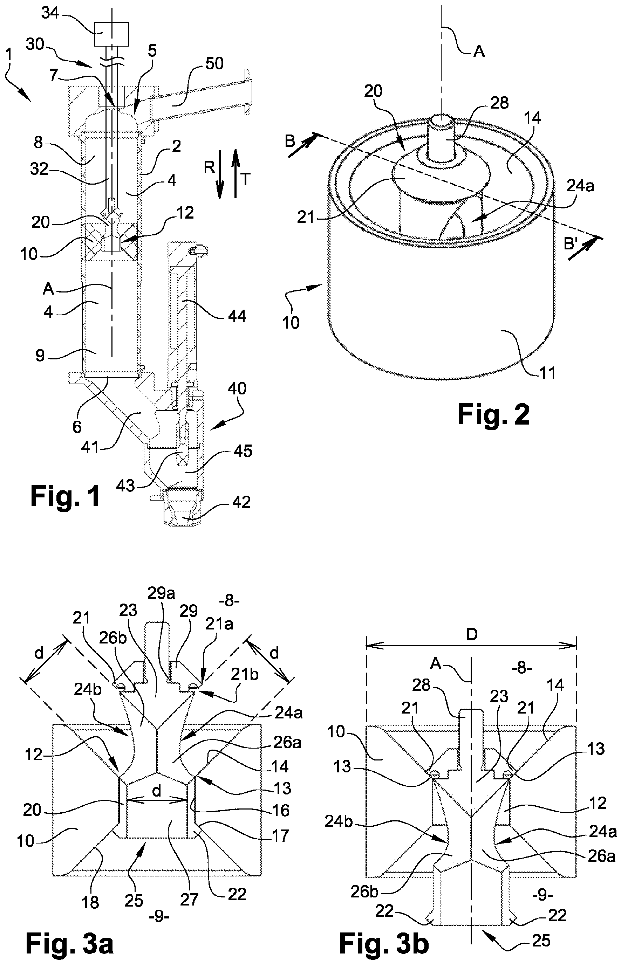

Ce passage 12 dans le piston 10 est apte à être obturé par un clapet 20, compris dans la chambre de dosage 4. Pour cela, des moyens de déplacement 30 du clapet 20 permettent de déplacer celui-ci entre une position d'ouverture, illustrée en figures 2 et 3a, et une position de fermeture, illustrée en figure 3b.

Ce clapet 20 comprend des moyens d'entrainement du piston 10. Comme on peut l'observer sur les figures 3a et 3b et comme il sera détaillé plus loin, ces moyens d'entrainement du piston sont répartis de part et d'autre du piston 10 avec un agencement selon lequel le déplacement du clapet 20 le long du corps de cylindre 2 dans un sens de refoulement R, notamment selon l'axe longitudinal A de ce dit corps de cylindre 2, entraine le déplacement du piston 10 selon ce dit sens de refoulement R. De même, cet agencement permet que le déplacement du clapet 20 le long du corps de cylindre 2 dans un sens de transfert T opposé au sens de refoulement R, entraine le déplacement du piston 10 selon ce dit sens de transfert T.

Selon l'exemple illustré en figure 1, les moyens de déplacement 30 du clapet 20 comprennent une tige de déplacement 32, dont l'une des extrémités est fixée au clapet 20. Cette tige de déplacement 32 est actionnée par un dispositif d'actionnement 34 comprenant un moteur électrique, représenté schématiquement en figure 1. Ce moteur entraine le déplacement de la tige de déplacement 32, et donc du clapet 20 selon le sens de refoulement R ou le sens de transfert T.

Les moyens d'entrainement du piston sont réalisés dans cet exemple par une butée inférieure 22 et une butée supérieure 21. Ces butées 21, 22, sont par exemple de formes tronconiques avec un diamètre maximal supérieur au diamètre du trou traversant formant le passage 12 dans le piston 10.

Pour cela, et comme illustré, le clapet comprend une portion de liaison 23 qui relie ces deux butées 21, 22. La portion de liaison 23 traverse le passage 12 du piston 10, de sorte que la butée supérieure 21 est dans le compartiment d'alimentation 8 et la butée inférieure 22 est dans le compartiment de dosage 9.

La portion de liaison 23 présente elle-même un passage, qui lorsque le clapet 20 est en position d'ouverture, comme en figure 3a, débouche d'un côté dans le compartiment d'alimentation 8 et de l'autre dans le compartiment de dosage 9.

Dans l'exemple illustré, ce passage 12 dans la portion de liaison 23 est formé par trois conduits agencés en « Y », et, dans cet exemple cylindriques entre leurs jonctions et leurs ouvertures. Il s'agit d'un conduit longitudinal 27 et de deux conduits transversaux 26a et 26b.

Chaque conduit transversal 26a, 26b débouche d'un côté dans le compartiment d'alimentation 8. Le passage dans la portion de liaison 23 présente donc deux ouvertures d'entrée :
- une première ouverture d'entrée 24a située entre la butée supérieure 21 et la butée inférieure 22, et correspondant à une ouverture d'entrée du premier conduit transversal 26a, et
- une deuxième ouverture d'entrée 24b également située entre la butée supérieure 21 et la butée inférieure 22, mais à l'opposé de la première ouverture d'entrée 24a par rapport à la portion de liaison 23 ; elle correspond à une ouverture d'entrée du deuxième conduit transversal 26b.

Le premier conduit transversal 26a et le deuxième conduit transversal 26b se rejoignent par leur autre côté, et rejoignent également au même endroit l'une des extrémités du conduit longitudinal 27. Ce dernier présente à son autre extrémité une ouverture de sortie 25, qui débouche en-dessous de la butée inférieure 22.

De ce fait, quand le clapet 20 est en position d'ouverture, le passage dans le clapet 20 forme une communication entre le compartiment d'alimentation 8 et le compartiment de dosage 9.

En revanche, quand le clapet 20 est en position de fermeture, les ouvertures d'entrées 24a, 24b des conduits transversaux 26a, 26b, sont en-dessous des bords 13 dudit trou traversant 12 situés côté compartiment d'alimentation 8. Ainsi, dans la position de fermeture, dans laquelle la butée supérieure 21 est en contact avec les bords 13 du trou traversant 12, les ouvertures d'entrée 24a et 24b, sont inaccessibles depuis le compartiment d'alimentation 8.

Dans cet exemple, en haut des ouvertures d'entrée 24a et 24b, la portion de liaison 23 présente une section circulaire dont le diamètre est voisin de celui du trou traversant 12. De ce fait, ces ouvertures 24a et 24b ne sont plus accessibles et le passage dans le clapet n'est plus accessible. De ce fait, le passage 12 au travers du piston 10 est également fermé par le clapet 20.

Selon une réalisation, les bords 13 du trou traversant 12 du côté du compartiment d'alimentation 8 sont de forme complémentaire de la forme tronconique de la butée supérieure 21. Ainsi en position de fermeture, ces bords 13 forment un siège sur lequel s'appuie la butée supérieure 21, fermant de manière étanche le passage 12 au travers du piston 10.

La partie de la portion de liaison 23 située entre les ouvertures d'entrée 24a, 24b et la butée inférieure 22, est cylindrique et son diamètre est de préférence ajusté à celui du trou traversant 12, tout en laissant un jeu pour permettre le coulissement de la portion de liaison 23 dans le trou traversant 12. Cela permet de maximiser la largeur du passage pour le produit au travers de la portion de liaison 23.

La butée inférieure 22 peut également présenter une forme tronconique orientée vers le piston 10. Les bords 17 du trou traversant 12, côté compartiment de dosage 9, peuvent également avoir une forme complémentaire de cette forme tronconique, et former ainsi un siège pour la butée supérieure 22. Cela améliore l'étanchéité entre la portion de liaison 23 et la paroi interne cylindrique 16 du trou traversant 12.

Comme on peut le voir de ces figures, quand le moteur électrique du dispositif d'actionnement 34 actionne la tige de déplacement 32 en descente, soit dans le sens dit de refoulement R, le clapet 20 descend également. Dans un premier temps, la portion de liaison 23 coulisse dans le trou traversant 12, jusqu'à ce que la butée supérieure 21 vienne en appui ajusté avec le siège formé par les bords 13 du trou traversant 12 côté chambre d'alimentation 8. Le clapet 20 est alors en position de fermeture. Les compartiments d'alimentation 8 et de refoulement 9 sont alors séparés de manière étanche.

La précision du dosage peut également être améliorée en ajoutant un joint torique (non représenté) sur la paroi périphérique 11 latérale du piston en vis-à-vis de la paroi interne du corps de cylindre 2. En effet, en évitant des fuites de produit entre la paroi périphérique 11 et la paroi interne du corps de cylindre 2, cela permet que la quantité de produit atteignant le récipient à remplir corresponde au volume de produit déplacé dans la chambre de dosage 4 sur la longueur de déplacement du piston 10 dans cette chambre.

Ensuite dans un deuxième temps, au cours de la descente de la tige de déplacement 32, le clapet reste en position de fermeture, la butée supérieure 21 appuyée contre le piston 10, et entraine en déplacement le piston 10 vers le bas. De ce fait, le volume du compartiment d'alimentation 8 s'agrandit et le produit présent dans la cuve (non représentée) est aspiré au travers de ladite conduite 50, jusque dans le compartiment d'alimentation 8. En même temps, le déplacement du piston 10 vers le bas entraine le refoulement du produit présent dans le compartiment de dosage 9 hors de la chambre de dosage 4, par la sortie 6, où le produit entre dans un premier canal 41 d'une buse 40.

Cette buse 40 comprend un bec 42 destiné à être agencé au-dessus du récipient à remplir. Entre le premier canal 41 et ce bec 42, la buse comprend un logement 45 où arrive le produit dosé et à l'intérieur duquel une pièce d'obturation 43 se déplace pour fermer ou ouvrir le bec 42. Cette pièce d'obturation 43 peut être entrainée de différentes manières, notamment par un vérin 44. Lors du refoulement du produit, cette pièce d'obturation est dégagée du bec 42 pour permettre la sortie du produit par la buse 40.

Le volume de produit dosé correspond au volume de la portion du corps de cylindre 2 le long de laquelle s'est déplacé le piston 10.

Le moteur électrique peut être programmé pour une longueur de course donnée du piston 10, correspondant à un volume donné. On peut par exemple remplir plusieurs récipients en déplaçant le piston dans le même sens de refoulement R. Le déplacement du piston est juste arrêté et le bec 32 obturé, le temps qu'un autre récipient soit amené sous le bec 32. Le bec est ensuite à nouveau ouvert et la descente du piston 10 poursuivie.

Une fois toute la quantité de produit souhaitée refoulée, le moteur électrique 34 actionne le déplacement de la tige de déplacement 32, dans le sens opposé, soit dans le sens de transfert T. A cet instant, l'aspiration ayant eu lieu en même temps que le refoulement, le compartiment d'alimentation 8 est rempli de produit. De préférence, la pièce d'obturation 43 est déplacée de manière à fermer le bec 42.

Dans un premier temps, la portion de liaison 23 coulisse dans le trou traversant 12 du piston 10 selon le sens de transfert T, jusqu'à ce que la butée inférieure 22 vienne en appui ajusté avec le siège formé par les bords 17 du trou traversant côté compartiment de dosage 9. Le clapet 20 est alors en position d'ouverture. Les compartiments d'alimentation 8 et de dosage 9 communiquent alors entre eux.

Ensuite dans un deuxième temps, au cours de la montée de la tige de déplacement 32, le clapet 20 reste en position ouverte, la butée inférieure 22 appuyée contre le piston 10, et entraine en déplacement le piston 10 vers le haut. Ainsi, lors du déplacement du piston, le produit présent dans le compartiment d'alimentation 8 passe au travers du piston 10 via le passage 26a, 26b, 27, dans la portion de liaison 23, jusque dans le compartiment de dosage 9.

Lorsque le piston est remonté, le produit a été transféré du compartiment d'alimentation 8 au compartiment de dosage 9. Il est à nouveau possible de remplir d'autres récipients, comme précédemment décrit.

Ainsi le clapet permet non seulement la fermeture et l'ouverture mais également l'actionnement du piston. Un seul actionneur est donc nécessaire pour ces fonctions.

Par ailleurs, le piston est de forme simple à réaliser.

Le dispositif est également facile à nettoyer. Par exemple, tout en actionnant le clapet 20 selon des mouvements de va-et-vient au travers le passage 12 du piston 10, il est possible d'envoyer de l'eau sous pression, par exemple via la conduite d'admission 50. L'eau passe alors au travers des conduits 26a, 26b et 27 et d'un compartiment 8, 9, à l'autre. On peut nettoyer ainsi aisément les parois du corps de cylindre 2, le piston 10 et son passage 12, l'ensemble du clapet 20 et de ses conduits transversaux 26a, 26b et longitudinal 27. La forme simple du piston 10, l'agencement en « Y » des conduits 26a, 26b et 27, et la forme tronconique des butées 21, 22, facilitent également ce nettoyage.

De plus, comme on peut l'observer en figure 1, une seule tige d'actionnement traverse les parois de la chambre de dosage 4 : la tige de déplacement 32 du clapet 20. Cette tige 32, traverse les parois de la chambre de dosage 4 au sommet de cette dernière par un orifice de passage 7, comprenant de préférence un joint (non représenté). Ainsi, la chambre de dosage 4 ne comprend que trois orifices : l'orifice d'admission 5, l'orifice de refoulement 6 et l'orifice de passage de la tige de déplacement 32. Ainsi, ce dispositif de dosage 1 est plus facile à gérer en termes d'étanchéité et d'hygiène.

De plus, les tiges qui trempent dans le produit à doser et coulissent à travers les parois de la chambre de dosage sont des points critiques en matière d'hygiène. Selon des réalisations, et en particulier selon cet exemple, seule la tige de déplacement 32 traverse les parois de la chambre de dosage 4, ce qui améliore davantage l'hygiène du dispositif de dosage 1.

Pour améliorer l'utilisation de ce dispositif au regard de produit comportant des morceaux, tel que des yaourts avec des morceaux de fruits, les conduits transversaux 26a, 26b et le conduit longitudinal 27, peuvent présenter des portions cylindriques de diamètre d égaux.

De plus, le piston 10 présente, dans l'exemple illustré, une forme en entonnoir 14 qui rétrécit vers le bas, donc vers le trou traversant 12, et donc également vers les ouvertures d'entrées 24a et 24b lorsque le clapet 20 est en position d'ouverture. De ce fait, lors de la remontée du piston 10, les morceaux sont guidés vers les ouvertures d'entrées 24a et 24b. Cette forme en entonnoir 14 peut être tronconique, avec par exemple un axe de cône coaxial avec l'axe longitudinal A du corps de cylindre 2 et avec celui du conduit longitudinal 27.

Dans le mode de réalisation illustré, la distance transversale, soit orthogonale à l'axe longitudinal A, du point le plus large 21a de la butée supérieure 21, soit son endroit le plus proche de la paroi interne du corps de cylindre 2, est égale aux diamètres d des conduits transversaux 26a, 26b et du conduit longitudinal 27. On exploite ainsi au maximum l'espace possible pour le passage de morceaux. Ce passage peut par exemple être proche du tiers du diamètre D du corps de cylindre 2. En fait, si on considère l'écart entre le diamètre de la butée supérieure 21 au niveau de son point le plus large 21a et le diamètre d des conduits 26a, 26b, 27, dit écart de butée supérieure 21, le diamètre des conduits est égal à environ un tiers de la différence entre le diamètre D du corps de cylindre et cet écart de butée supérieure 21.

Comme on peut le voir sur les figures 1 à 3b, le piston 10 est de forme simple. Il comprend une pièce torique d'axe correspondant à l'axe longitudinal A, formant une paroi périphérique 11 cylindrique sur l'essentiel de sa surface latérale. Cette paroi périphérique 11 entoure deux formes en entonnoir 14 et 18, diminuant l'une vers l'autre et se rejoignant par un trou traversant cylindrique, formant le passage 12 dans le piston 10.

Egalement le clapet 20 est réalisé de façon simple. Il comprend selon une réalisation de l'invention, notamment dans cet exemple, deux pièces monobloc. La première pièce monobloc est formée par la portion de liaison 23 et la butée inférieure 22. Elle porte une tige filetée 28. La deuxième pièce monobloc comprend la butée supérieure 21 et peut, par exemple, être une bague 29 vissée sur la tige filetée 28, le trou central taraudé 29a de la bague formant le moyen de fixation à la portion de liaison 23.

La tige filetée 28 peut être agencée pour traverser en partie la bague 29. De ce fait, l'extrémité libre de cette tige filetée 28 est disponible pour se visser dans un logement correspondant de la tige de déplacement 32.

Selon une variante de réalisation, le trou central 29a de la bague 29, ne comprend pas de taraudage, mais des parois lisses. La bague 29 est alors simplement enfilée sur la tige filetée 28 et c'est le vissage de la tige de déplacement 32 du clapet 20 sur la tige filetée 28 qui va permettre de prendre la bague 29 en étau entre l'extrémité correspondante de la tige de déplacement 32 et la portion de liaison 23.

A part au niveau des conduits transversaux 26a, 26b, et le filetage de la tige filetée 28, cette première pièce monobloc peut être un solide de révolution, avec ici un axe de révolution coaxial avec l'axe longitudinal A.

De même à part le filetage interne de la bague 29, lorsque cette dernière en comprend un, cette bague peut également être un solide de révolution, avec ici un axe de révolution coaxial avec l'axe longitudinal A.

Pour éviter tout risque de contamination par le produit au niveau de la tige filetée 28, la bague 29 peut comprendre une cannelure 21b au niveau de la jonction de cette bague 29 et de la première pièce monobloc, agencée pour recevoir un joint torique (non représenté). Les pièces monobloc sont agencées pour pincer ce joint lorsque la bague 29 est vissée à fond sur la tige filetée 28 ou prise en étau entre la tige de déplacement 32 et la portion de liaison 23.

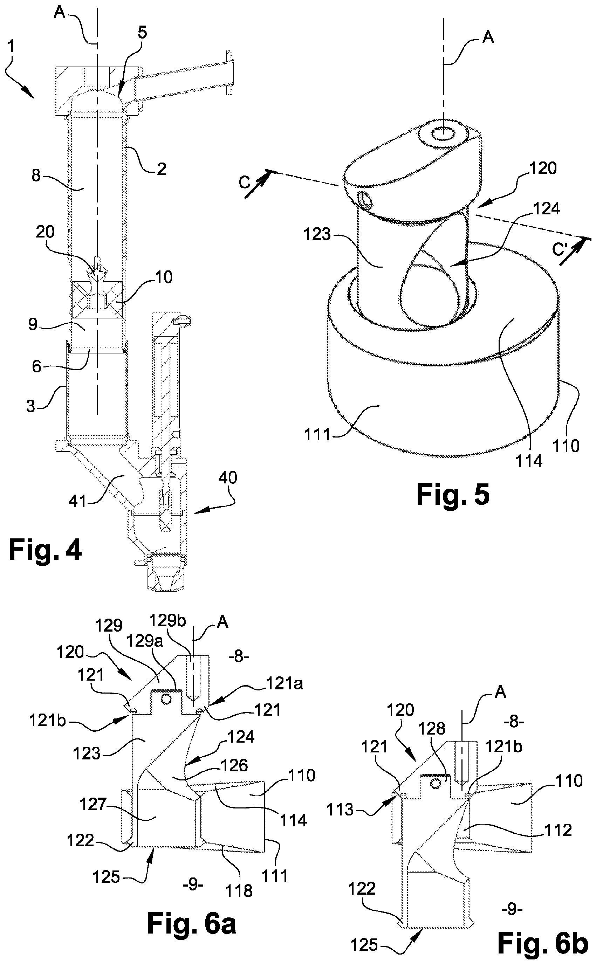

La figure 4, illustre toujours le dispositif de dosage 1 de la figure 1, mais dans un montage différent. En effet, dans la figure 4, le dispositif de dosage 1 comprend un manchon 3, qui a été monté entre l'orifice de sortie 6 du corps de cylindre 2 et la buse 40. Ce manchon 3, globalement cylindrique, est dans le prolongement du corps de cylindre 2 et de ce fait il définit avec ce dernier une chambre de nettoyage 3a. Le diamètre intérieur de ce manchon 3 est légèrement supérieur au diamètre du corps de cylindre 2. Ainsi, on peut positionner le piston 10 dans la chambre de nettoyage 3a et nettoyer la paroi périphérique 11 cylindrique du piston.

De plus, ce montage est plus facile dans la mesure où c'est le clapet 20 qui actionne le piston 10.

A noter que selon une variante de réalisation, le manchon 3 pourrait être monté entre l'extrémité haute du corps de cylindre 2 et l'orifice d'admission 5, au lieu d'être monté en bas comme en figure 4.

En figure 4, les moyens de déplacements 32 du clapet 20 n'ont pas été illustrés pour des raisons de clarté. Dans cet exemple, ce peut cependant être les mêmes que ceux de la figure 1.

Les figures 5 à 6b illustrent un deuxième mode de réalisation avec un piston 110 et un clapet 120 différents. Ils sont agencés de manière à faire passer des morceaux plus gros que le piston 10 et le clapet 20 du premier mode de réalisation.

Le clapet 120 et le piston 110 peuvent s'adapter dans le dispositif de dosage 1 à la place du clapet 20 et du piston 10 précédemment décrit. Ils ne seront donc pas à nouveau illustré placés dans le corps de cylindre 2. De même, la coopération du piston 110 et du corps de cylindre ne sera pas détaillée comme précédemment. Le piston 110 assure ici également la séparation de la chambre de dosage en deux compartiments, le compartiment d'alimentation 8 et le compartiment de dosage 9.

Cependant dans ce deuxième mode de réalisation, le passage 112 dans le piston est excentré. En particulier dans cet exemple, le passage 112 est un trou traversant cylindrique dons l'axe est décalé par rapport au centre du piston 110, et donc par rapport à l'axe longitudinal A du corps de cylindre.

Le piston 110 de ce mode de réalisation présente également une forme en entonnoir 114 du compartiment d'alimentation 8, se rétrécissant vers ce trou traversant 112. Cette forme en entonnoir 114 est également agencée pour que lors du déplacement du clapet 120 selon le sens de transfert, le produit et ses morceaux soient guidés vers le trou traversant 112.

Du côté du compartiment de dosage 9, le piston peut également comprendre une forme en entonnoir 118 se rétrécissant vers le trou traversant 112.

Le clapet 120 comprend également des butées supérieure 121 et inférieure 122, situées de part et d'autre du trou traversant 112, pour coopérer avec des formes complémentaires du piston 110 et entrainer ce dernier en déplacement de la même manière que dans le premier mode de réalisation.

Ces butées 121 et 122 peuvent être tronconiques et/ou coopérer avec des bords 113, 117 du trou traversant.

Le clapet comprend également une portion de liaison 123 entre ces butées 121 et 122. Cependant la portion de liaison 123 diffère de celle du premier mode de réalisation en ce qu'elle ne comprend qu'un seul conduit transversal 126, débouchant dans le compartiment d'alimentation 8 par une unique ouverture d'entrée 124. L'autre extrémité du conduit transversal 126 se joint à un conduit longitudinal 127, qui débouche quant à lui dans le compartiment de dosage 9, via une ouverture de sortie 125.

Comme dans le premier mode de réalisation, la position d'ouverture du clapet 120, illustrée en figure 6a, correspond à la position dans laquelle le clapet 120 est apte à entrainer le piston 110 en déplacement selon le sens de transfert, soit vers le haut, le produit passant alors du compartiment d'alimentation 8 au compartiment de dosage 9. La position fermée du clapet 120, illustrée en figure 6b, correspond à la position dans laquelle le clapet 120 est apte à entrainer le piston 110 en déplacement selon le sens de refoulement, soit vers le bas, le produit dans le compartiment de dosage 9 étant alors refoulé vers la buse, en même temps que du produit est aspiré dans le compartiment d'alimentation 8.

Le conduit longitudinal 127 et le conduit transversal 126 forment donc un angle entre eux. Le conduit transversal 126 est agencé de manière à ce que l'ouverture d'entrée 124 soit située du côté du piston où la distance entre la paroi périphérique 111 du piston 110 et le trou traversant 112 est la plus élevée. Ainsi, cette ouverture d'entrée est tournée vers l'espace le plus large entre la portion de liaison 123 et le corps de cylindre. Cela permet que de plus gros morceaux puissent passer entre le clapet 120 et les parois du corps de cylindre comparé au premier mode de réalisation.

De plus pour optimiser cet avantage, les diamètres du conduit transversal 126 et du conduit longitudinal 127 peuvent être plus élevés et approcher près de la moitié du diamètre du corps de cylindre.

En fait, si on considère l'écart entre le diamètre de la butée supérieure 121 au niveau de son point le plus large 121a et le diamètre des conduits 126, 127, dit écart de butée supérieure, le diamètre des conduits sera égal à la moitié de la différence entre le diamètre D du corps de cylindre et cet écart de butée supérieure 121.

Ce mode de réalisation permet donc avec un même corps de cylindre de faire passer un produit avec des morceaux plus gros.

On pourra par exemple dans le dispositif de dosage illustré en figure 1, utiliser un ensemble clapet/piston selon le premier ou selon le deuxième mode de réalisation en fonction du produit dosé.

Dans ce deuxième mode de réalisation, le clapet 120 peut également être en deux pièces monobloc. La première pièce monobloc est formée par la portion de liaison 123 et la butée inférieure 122. Elle peut porter une tige filetée 128. La deuxième pièce monobloc peut être une bague 129 vissée sur la tige filetée 128.

La tige filetée 128 peut notamment être uniquement destinée à la fixation des deux pièces monobloc et est excentrée par rapport au centre du piston 112 mais centrée par rapport à l'axe du conduit longitudinal 127. De ce fait, la bague 129 peut présenter un premier logement 129a, préférentiellement non traversant, présentant un taraudage dans lequel vient se visser la tige filetée 128. La bague 129 peut présenter de la même manière que dans le premier mode de réalisation, une cannelure 121b pour accueillir un joint torique (non représenté) assurant l'étanchéité entre les deux pièces monoblocs.

La bague 129 peut présenter un deuxième logement 129b avec un taraudage interne dans lequel vient se visser la tige de déplacement du clapet 120. Ce deuxième logement 129b est de préférence centré par rapport à l'axe longitudinal A du corps de cylindre et donc par rapport au centre du piston 110.

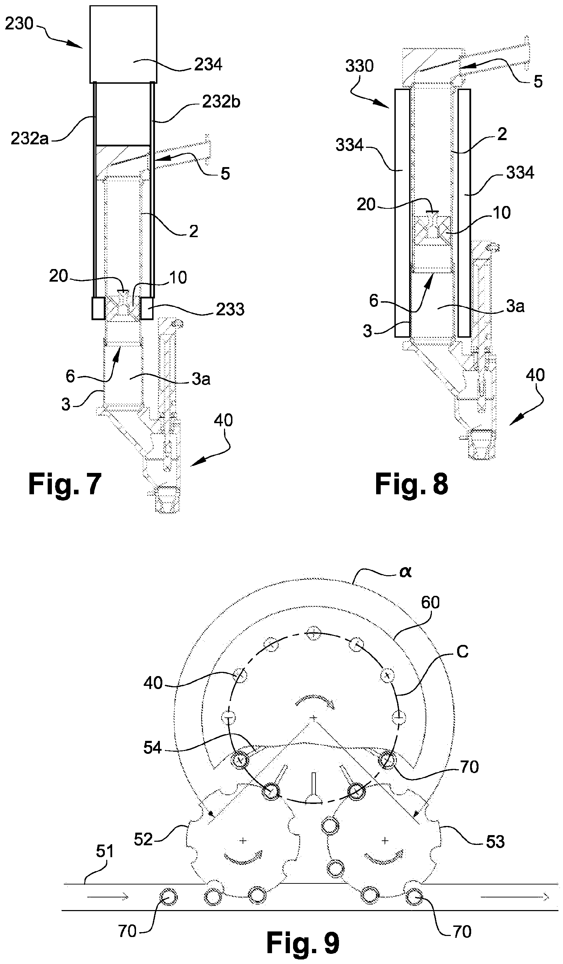

Dans un troisième et un quatrième mode de réalisation illustrés respectivement en figure 7 et en figure 8, qui sont des modes de réalisation selon l'invention, le dispositif de dosage diffère de celui des modes de réalisation précédents par les moyens de déplacement 230, 330, du clapet 20. Seules les références de ces moyens de déplacement sont donc modifiées.

Selon le troisième mode de réalisation, les moyens de déplacement 230 du clapet 20 comprennent un aimant de déplacement 233 logé à l'extérieur du corps de cylindre 2. Cet aimant de déplacement 233 peut être annulaire et logé autour du corps de cylindre 2, comme en figure 3. L'aimant de déplacement 233 est entrainé par des moyens d'entrainement le long de ce corps de cylindre 2, notamment parallèlement à l'axe longitudinal A du corps de cylindre. Ici, il s'agit de tiges de déplacement 232a, 232b, situées à l'extérieur et le long du corps de cylindre 2. Ces tiges de déplacement 232a, 232b peuvent être actionnées par un moteur 234.

Le clapet 20 comprend un matériau magnétique. L'aimant 233 et le matériau magnétique sont agencés de manière à ce que le déplacement de l'aimant 233 entraine le déplacement du clapet 20 et donc le déplacement du piston 10. Ainsi l'aimant 233, les tiges de déplacement 232a, 232b, et le moteur 234 forment des moyens de génération d'une variation d'un champ magnétique le long du corps de cylindre 2 de manière à entrainer le déplacement du clapet 20.

Le quatrième mode de réalisation utilise également un clapet 20 avec un matériau magnétique déplacé par des moyens de génération d'une variation d'un champ magnétique le long du corps de cylindre 2. Cependant, dans ce quatrième mode de réalisation, les moyens de génération d'une variation d'un champ magnétique sont formés par un moteur électrique linéaire 334, agencé autour et le long du corps de cylindre 2. Ce moteur électrique linéaire 334 permet de faire varier directement le champ magnétique le long du corps de cylindre 2.

Alternativement, dans des variantes de ces troisième et quatrième modes de réalisation, le piston comprend un matériau magnétique et c'est le piston qui ouvre et ferme le clapet lors de son déplacement.

Ainsi, tant dans le troisième mode de réalisation, que dans le quatrième mode de réalisation, ainsi que selon leurs variantes, il n'y a plus de tige de déplacement dans la chambre de dosage. Les parois de la chambre de dosage ne sont plus traversées et la chambre de dosage peut comprendre uniquement deux orifices: l'orifice d'admission 5 et l'orifice de refoulement 6. Ces troisième et quatrième modes de réalisation, ainsi que leurs variantes sont donc plus performants en termes d'hygiène.

De plus, les clapets, excentrés ou non, notamment les bagues portant la butée supérieure, sont plus simples à réaliser car ils n'ont plus besoin de moyen de fixation à une tige de déplacement.

La figure 9 illustre une machine de remplissage selon l'invention comprenant un carrousel 60 apte à supporter des récipients 70, via des moyens de support 54. Les postes de dosage sont répartis radialement et comprennent chacun un dispositif de dosage selon l'invention. Par souci de clarté, seuls les emplacements des becs des buses 40 des dispositifs de dosage sont représentés. L'ensemble de ces becs est disposé selon un cercle C centré sur l'axe de rotation Z du carrousel 60.

Les moyens de déplacement des clapets de ces dispositifs de dosage comprennent un moteur électrique, pour actionner le déplacement du clapet correspondant, selon l'un des modes de réalisation précédemment décrit.

Un système d'amenée de récipients 70 à remplir, connu en soi, tel qu'un convoyeur 51 à bande combiné à un convoyeur tournant de transfert, ici une première étoile de transfert 52, qui permet d'engager latéralement les récipients 70 entre les pinces des moyens de support 54, et un système d'évacuation, comprenant une deuxième étoile de transfert 53 combinée par exemple à une portion aval du convoyeur 51 à bande précité, permettant d'évacuer latéralement les récipients remplis.

Une fois supportés sur le carrousel 60, les récipients vont effectuer un parcours de récipient, tout au long duquel ils vont être remplis par la buse correspondante. Ce parcours correspond à un secteur angulaire α, ce secteur angulaire étant défini par rapport à l'axe de rotation Z du carrousel 60.

Du fait de l'utilisation de moyens de déplacement simples du clapet et du piston, en particulier d'un moteur électrique, ce secteur angulaire α peut être supérieur à 180°, notamment supérieur à 270°, par exemple jusqu'à 288°. Dans cet exemple, il est de 270°.

Par exemple, si l'on considère un carrousel classique avec un parcours de récipient avec 20 postes de dosages, tournant à 10 tours par minute, on obtient une cadence de 200 récipients remplis par minute. Sur un carrousel classique, le parcours de récipients se fait sur un secteur angulaire de 180°.

Avec une machine selon l'invention et selon l'exemple illustré, on peut agencer comme illustré les postes de dosage de manière à ce que le remplissage se fasse sur un parcours de récipient correspondant à un secteur angulaire α de 270°. Ainsi, il est possible d'augmenter la vitesse de rotation du carrousel 60 à 15 tours par minutes, tout en conservant la même durée de remplissage le long d'un parcours de récipient plus long.

De ce fait, avec seulement quatorze dispositifs de dosage, on obtient une cadence de 210 récipients 70 remplis par minute, c'est-à-dire 210 récipients 70 par minutes passant du carrousel 60 à la deuxième étoile de transfert 53.

Cette machine permet ainsi un gain en terme de ratio nombre de postes de remplissage / cadence de récipients remplis par rapport à une machine de remplissage classique.

## Revendications

1. Dispositif de dosage (1) pour machine de remplissage de récipients par un produit, comprenant :
- un corps de cylindre (2) définissant une chambre de dosage (4), destinée à être remplie par le produit,
- un piston (10 ; 110) à l'intérieur de ladite chambre de dosage et séparant ladite chambre de dosage en un compartiment d'alimentation (8) et un compartiment de dosage (9), le piston comprenant un passage (12 ; 112) communiquant entre le compartiment d'alimentation et le compartiment de dosage de manière à permettre le passage du produit d'un compartiment à l'autre,
- un clapet (20 ; 120) de fermeture de ce passage (12 ; 112),
- des moyens de déplacement (30 ; 230 ; 330) du clapet ou des moyens de déplacement (230 ; 330) du piston le long du corps de cylindre,
dans lequel ledit clapet comprend des moyens d'entrainement (21, 22 ; 121, 122) agencés de part et d'autre du piston de manière à ce que le déplacement respectivement du clapet ou du piston le long du corps de cylindre dans un sens de refoulement (R) entraine le déplacement respectivement du piston ou du clapet selon ce dit sens de refoulement et le déplacement respectivement du clapet ou du piston le long du corps de cylindre dans un sens de transfert (T) opposé au sens de refoulement, entraine le déplacement respectivement du piston ou du clapet selon ce dit sens de transfert,
et **caractérisé en ce que** :
- le clapet (20 ; 120) comprend un matériau magnétique, et dans lequel lesdits moyens de déplacement (230 ; 330) du clapet comprennent des moyens de de variation d'un champs magnétique (234, 232a, 232b, 233 ; 334) agencés de manière à entrainer le déplacement de l'aimant par variation du champs magnétique le long du corps de cylindre (2) de manière à entrainer le déplacement du clapet, ou
- le piston (10 ; 110) comprend un matériau magnétique, des moyens de génération (234, 232a, 232b, 233) d'une variation de champ magnétique le long du corps de cylindre (2) entrainant le déplacement du piston, qui entraine le déplacement du clapet (20 ; 120) via lesdits moyens d'entraînement (21, 22 ; 121, 122),
le corps de cylindre (2) étant dépourvu de toute tige d'actionnement, et donc également d'orifice traversé par une telle tige.

2. Dispositif de dosage (1) selon la revendication 1, dans lequel ledit passage (12 ; 112) est un trou traversant.

3. Dispositif de dosage (1) selon la revendication 2, dans lequel lesdits moyens d'entrainement (10 ; 110) comprennent :
- une butée supérieure (21 ; 121) située du côté du compartiment d'alimentation (8), et agencée de manière à pouvoir entrer en contact avec le piston (10 ; 110) du côté du compartiment d'alimentation lorsque le clapet (20 ; 120) est actionné selon le sens de refoulement (R),
- une butée inférieure (22 ; 122) située du côté du compartiment de dosage (9), et agencée de manière à pouvoir entrer en contact avec le piston du côté du compartiment de dosage lorsque le clapet est actionné selon ledit sens de transfert (T),
- une portion de liaison (23 ; 123) reliant entre elles ces butées inférieures et supérieures, et traversant ledit trou traversant (12 ; 112).

4. Dispositif de dosage (1) selon la revendication 3, dans lequel ladite butée supérieure (21 ; 121) est agencée de manière à fermer ledit trou traversant (12 ; 112) lorsqu'elle vient en contact avec ledit piston (10 ; 110).

5. Dispositif de dosage (1) selon l'une des revendications 3 à 4, dans lequel ladite portion de liaison (23 ; 123) comprend un passage avec une ouverture d'entrée (24a ; 124) et une ouverture de sortie (25 ; 125) situées de part et d'autre de la butée inférieure (22 ; 122), l'ouverture d'entrée étant située entre la butée supérieure (21 ; 121) et la butée inférieure (22 ; 122), le clapet (20 ; 120) étant agencé de manière à ce que lorsque la butée inférieure est en contact avec le piston (10 ; 110), l'ouverture d'entrée débouche dans le compartiment d'alimentation (8).

6. Dispositif de dosage (1) selon la revendication 5, le passage dans la portion de liaison (23 ; 123) comprend un conduit longitudinal (27 ; 127) et un conduit transversal (26a ; 126), ledit conduit longitudinal débouchant d'un côté par ladite ouverture de sortie (25 ; 125) et de l'autre se reliant à un côté du conduit transversal, l'autre côté du conduit transversal débouchant par ladite ouverture d'entrée (24a).

7. Dispositif de dosage (1) selon la revendication 6, dans lequel le passage dans la portion de liaison (23) comprend une deuxième ouverture d'entrée (24b) située entre la butée supérieure (21) et la butée inférieure (22), le clapet (20) étant agencé de manière à ce que lorsque la butée inférieure est en contact avec le piston (10), la deuxième ouverture d'entrée débouche dans le compartiment d'alimentation (8), la portion de liaison comprenant un deuxième conduit transversal (26b) débouchant d'un côté par cette deuxième ouverture d'entrée et se reliant de l'autre au conduit longitudinal (27), le trou traversant (12) étant centré sur le piston, le diamètre (d) des conduits transversaux et longitudinaux étant voisin du tiers de la valeur du diamètre (D) du corps de cylindre (2).

8. Dispositif de dosage (1) selon l'une des revendications 3 à 6, dans lequel le trou traversant (112) est excentré sur le piston (110).

9. Dispositif de dosage (1) selon l'une des revendications 3 à 8, dans lequel la portion de liaison (23 ; 123) est formée venue de matière en une seule pièce avec la butée inférieure (22 ; 122), et dans lequel le clapet (20 ; 120) comprend une pièce de fermeture (29 ; 129) comprenant ladite butée supérieure (21 ; 121), ladite pièce de fermeture comprenant également un moyen de fixation (29a ; 129a) de ladite portion de liaison à cette pièce de fermeture.

10. Dispositif de dosage (1) selon l'une des revendications précédentes, dans lequel ledit piston (10 ; 110) comprend au moins du côté du compartiment d'alimentation (8) une zone en forme d'entonnoir (14 ; 114) se rétrécissant vers l'entrée du passage (12 ; 112) dans le piston.

11. Dispositif de dosage (1) selon l'une des revendications précédentes, lorsque le piston (10 ; 110) comprend un matériau magnétique, des moyens de génération (234, 232a, 232b, 233) d'une variation de champ magnétique le long du corps de cylindre (2) entrainant le déplacement du piston, qui entraine le déplacement du clapet (20 ; 120) via lesdits moyens d'entrainement (21, 22 ; 121, 122), dans lequel lesdits moyens de génération (234, 232a, 232b, 233) d'une variation d'un champ magnétique comprennent un aimant (233) à l'extérieur de la chambre de dosage et des moyens de déplacement (234, 232a, 232b) de cet aimant le long du corps de cylindre (2), le déplacement de cet aimant entrainant la variation dudit champs magnétique permettant le déplacement du piston (10 ; 110).

12. Machine de remplissage de récipients (70) comprenant des postes de dosage, chaque poste de dosage comprenant un dispositif de dosage (1) selon l'une quelconque des revendications précédentes, la machine de remplissage comprenant un carrousel (60) apte à supporter des récipients, les postes de dosages étant répartis radialement, les moyens de déplacement des clapets de ces postes de dosage comprenant un moteur électrique (34 ; 234 ; 334) pour actionner le déplacement du clapet (20 ; 120) correspondant, cette machine étant agencée de manière à ce que le remplissage des récipients puisse se faire sur un parcours de récipient correspondant à un secteur angulaire (α) par rapport à l'axe de rotation (Z) du carrousel supérieur à 180°, notamment supérieur à 270°.

## Patentansprüche

1. Dosiervorrichtung (1) für Maschine zum Füllen von Behältern mit einem Produkt, die Folgendes umfasst:
- einen Zylinderkörper (2), der eine Dosierkammer (4) definiert, die dazu bestimmt ist, mit dem Produkt gefüllt zu werden,
- einen Kolben (10; 110) in dem Inneren der Dosierkammer und der die Dosierkammer in einen Zuführraum (8) und einen Dosierraum (9) trennt, wobei der Kolben eine Passage (12; 112) umfasst, die zwischen dem Zuführraum und dem Dosierraum derart kommuniziert, dass das Durchgehen des Produkts von einem Raum zu dem anderen erlaubt wird,
- ein Ventil (20; 120) zum Schließen dieser Passage (12; 112),
- Mittel zum Verlagern (30; 230; 330) des Ventils oder Mittel zum Verlagern (230; 330) des Kolbens entlang des Zylinderkörpers, wobei das Ventil Antriebsmittel (21, 22; 121, 122) umfasst, die an jeder Seite des Kolbens derart eingerichtet sind, dass die Verlagerung jeweils des Ventils oder des Kolbens entlang des Zylinderkörpers in eine Rückstaurichtung (R) das Verlagern jeweils des Kolbens oder des Ventils gemäß dieser Rückstaurichtung bewirkt, und das Verlagern jeweils des Ventils oder des Kolbens entlang des Zylinderkörpers in eine Transferrichtung (T), die zu der Rückstaurichtung entgegengesetzt ist, dass Verlagern jeweils des Kolbens oder des Ventils gemäß dieser Transferrichtung bewirkt,
und **dadurch gekennzeichnet, dass**:
- das Ventil (20; 120) ein magnetisches Material umfasst, und wobei die Mittel zum Verlagern (230; 330) des Ventils Mittel zur Variation eines Magnetfelds (234, 232a, 232b, 233; 334) umfassen, die derart eingerichtet sind, dass das Verlagern des Magnets durch Variation des Magnetfelds entlang des Zylinderkörpers (2) derart bewirkt wird, dass das Verlagern des Ventils bewirkt wird, oder
- der Kolben (10; 110) ein magnetisches Material umfasst, wobei Mittel zum Erzeugen (234, 232a, 232b, 233) einer Variation des Magnetfelds entlang des Zylinderkörpers (2), das Verlagern des Kolbens bewirken, was das Verlagern des Ventils (20; 120) über die Antriebsmittel (21, 22; 121, 122) bewirkt,
wobei der Zylinderkörper (2) keinen Betätigungsschaft aufweist und daher auch keine Öffnung, die von einem solchen Schaft durchquert wird.

2. Dosiervorrichtung (1) nach Anspruch 1, wobei die Passage (12; 112) eine durchgehende Bohrung ist.

3. Dosiervorrichtung (1) nach Anspruch 2, wobei die Antriebsmittel (10; 110) Folgendes umfassen:
- einen oberen Anschlag (21; 121), der auf der Seite des Zuführraums (8) liegt und derart eingerichtet ist, dass er mit dem Kolben (10; 110) der Seite des Zuführraums in Berührung treten kann, wenn das Ventil (20; 120) entlang der Rückstaurichtung (R) betätigt wird,
- einen unteren Anschlag (22; 122), der auf der Seite des Dosierraums (9) liegt und derart eingerichtet ist, dass er mit dem Kolben auf der Seite des Dosierraums in Berührung treten kann, wenn das Ventil entlang der Transferrichtung (T) betätigt wird,
- einen Verbindungsabschnitt (23; 123), der diesen unteren und oberen Anschlag miteinander verbindet und der die durchgehende Bohrung (12; 112) durchquert.

4. Dosiervorrichtung (1) nach Anspruch 3, wobei der obere Anschlag (21; 121) derart eingerichtet ist, dass er die durchgehende Bohrung (12; 112) verschließt, wenn er mit dem Kolben (10; 110) in Berührung kommt.

5. Dosiervorrichtung (1) nach einem der Ansprüche 3 bis 4, wobei der Verbindungsabschnitt (23; 123) eine Passage mit einer Eingangsöffnung (24a; 124) und einer Ausgangsöffnung (25; 125), die an jeder Seite des unteren Anschlags (22; 122) liegen, umfasst, wobei die Eingangsöffnung zwischen dem oberen Anschlag (21; 121) und dem unteren Anschlag (22; 122) liegt, wobei das Ventil (20; 120) derart eingerichtet ist, dass, wenn der untere Anschlag in Berührung mit dem Kolben (10; 110) ist, die Eingangsöffnung in den Zuführraum (8) mündet.

6. Dosiervorrichtung (1) nach Anspruch 5, wobei die Passage in dem Verbindungsabschnitt (23; 123) eine Längsleitung (27; 127) und eine Querleitung (26a; 126) umfasst, wobei die Längsleitung auf einer Seite durch die Ausgangsöffnung (25; 125) mündet und sich auf der anderen Seite mit einer Seite der Querleitung verbindet, wobei die andere Seite der Querleitung durch die Eingangsöffnung (24a) mündet.

7. Dosiervorrichtung (1) nach Anspruch 6, wobei die Passage in dem Verbindungsteil (23) eine zweite Eingangsöffnung (24b), die zwischen dem oberen Anschlag (21) und dem unteren Anschlag (22) liegt, umfasst, wobei das Ventil (20) derart eingerichtet ist, dass, wenn der untere Anschlag mit dem Kolben (10) in Berührung ist, die zweite Eingangsöffnung in den Zuführraum (8) mündet, wobei der Verbindungsabschnitt eine zweite Querleitung (26b) umfasst, die auf einer Seite durch diese zweite Eingangsöffnung mündet und sich mit der anderen Längsleitung (27) verbindet, wobei die durchgehende Bohrung (12) auf dem Kolben zentriert ist, wobei der Durchmesser (d) der Quer- und der Längsleitung nahe dem Drittel des Werts des Durchmessers (D) des Zylinderkörpers (2) beträgt.

8. Dosiervorrichtung (1) nach einem der Ansprüche 3 bis 6, wobei die durchgehende Bohrung (112) auf dem Kolben (110) exzentriert ist.

9. Dosiervorrichtung (1) nach einem der Ansprüche 3 bis 8, wobei der Verbindungsabschnitt (23; 123) aus einem Stück aus einem einzigen Teil mit dem unteren Anschlag (22; 122) gebildet ist, und wobei das Ventil (20; 120) ein Verschlussteil (29; 129) umfasst, das den oberen Anschlag (21; 121) umfasst, wobei das Verschlussteil auch ein Befestigungsmittel (29a, 129a) des Verbindungsabschnitts an diesem Verschlussteil umfasst.

10. Dosiervorrichtung (1) nach einem der vorstehenden Ansprüche, wobei der Kolben (10; 110) mindestens auf der Seite des Zuführraums (8) eine Zone in Trichterform (14; 114) umfasst, die sich zu dem Eingang der Passage (12; 112) in dem Kolben verengt.

11. Dosiervorrichtung (1) nach einem der vorstehenden Ansprüche, wobei, wenn der Kolben (10; 110) ein magnetisches Material umfasst, Mittel zum Erzeugen (234, 232a, 232b, 233) einer Magnetfeldvariation entlang des Zylinderkörpers (2), das Verlagern des Kolbens bewirken, was das Verlagern des Ventils (20; 120) über die Antriebsmittel (21, 22; 121, 122) bewirkt, wobei die Mittel zum Erzeugen (234, 232a, 232b, 233) einer Variation eines Magnetfelds einen Magnet (233) außerhalb der Dosierkammer umfassen und Mittel zum Verlagern (234, 232a, 232b) dieses Magnets entlang des Zylinderkörpers (2), wobei das Verlagern dieses Magnets die Variation des Magnetfelds bewirkt, die das Verlagern des Kolbens (10; 110) erlaubt.

12. Maschine zum Füllen von Behältern (70), die Dosierposten umfasst, wobei jeder Dosierposten eine Dosiervorrichtung (1) nach einem der vorstehenden Ansprüche umfasst, wobei die Füllmaschine ein Karussell (60) umfasst, das geeignet ist, Behälter zu tragen, wobei die Dosierposten radial verteilt sind, die Verlagerungsmittel der Ventile dieser Dosierposten einen Elektromotor (34; 234; 334) zum Betätigen das Verlagerns des entsprechenden Ventils (20; 120) umfassen, wobei diese Maschine derart eingerichtet ist, dass das Füllen der Behälter auf einem Behälterweg erfolgen kann, der einem Winkelsektor (α) bezüglich der Rotationsachse (Z) des Karussells, der größer ist als 180°, insbesondere größer ist als 270°, ablaufen kann.

## Claims

1. Metering device (1) for a machine for filling containers with a product, comprising:
- a cylinder body (2) defining a metering chamber (4), intended to be filled with the product,
- a piston (10; 110) inside said metering chamber and separating said metering chamber into a supply compartment (8) and a metering compartment (9), with the piston comprising a passage (12; 112) that communicates between the supply compartment and the metering compartment in such a way as to allow the passage of the product from one compartment to the other,
- a valve (20; 120) for closing this passage (12; 112),
- movement means (30; 230; 330) of the valve or movement means (230; 330) of the piston along the length of the cylinder body,
in which said valve comprises drive means (21, 22; 121, 122) arranged on either side of the piston in such a way that the movement respectively of the valve or of the piston along the length of the cylinder body in a discharge direction (R) drives the movement respectively of the piston or of the valve in said discharge direction and the movement respectively of the valve or of the piston along the length of the cylinder body in a transfer direction (T) opposite the discharge direction, drives the movement respectively of the piston or of the valve in said transfer direction,
and **characterized in that**:
- the valve (20; 120) comprises a magnetic material, and wherein said movement means (230; 330) of the valve comprise means for varying a magnetic field (234, 232a, 232b, 233; 334) arranged in such a way as to drive the movement of the magnet by variation in the magnetic field along the length of the cylinder body (2) in such a way as to drive the movement of the valve, or
- the piston (10; 110) comprises a magnetic material, means for generating (234, 232a, 232b, 233) a variation in a magnetic field along the length of the cylinder body (2) driving the movement of the piston, which drives the movement of the valve (20; 120) via said drive means (21, 22; 121, 122),
the cylinder body (2) being devoid of any actuating rod, and therefore also of an orifice passed through by such a rod.

2. Metering device (1) according to claim 1, wherein said passage (12; 112) is a through-hole.

3. Metering device (1) according to claim 2, wherein said drive means (10; 110) comprise:
- an upper stop (21; 121) located on the side of the supply compartment (8), and arranged in such a way as to be able to come into contact with the piston (10; 110) on the side of the supply compartment when the valve (20; 120) is actuated in the discharge direction (R),
- a lower stop (22; 122) located on the side of the metering compartment (9), and arranged in such a way as to be able to come into contact with the piston on the side of the metering compartment when the valve is actuated according to said transfer direction (T),
- a connection portion (23; 123) that connects between them these lower and upper stops, and passing through said through-hole (12; 112).

4. Metering device (1) according to claim 3, wherein said upper stop (21; 121) is arranged in such a way as to close said through-hole (12; 112) when it comes into contact with said piston (10; 110).

5. Metering device (1) according to one of claims 3 to 4, wherein said connection portion (23; 123) comprises a passage with an inlet opening (24a; 124) and an outlet opening (25; 125) located on either side of the lower stop (22; 122), with the inlet opening being located between the upper stop (21; 121) and the lower stop (22; 122), with the valve (20; 120) being arranged in such a way that when the lower stop is in contact with the piston (10; 110), the inlet opening opens into the supply compartment (8).

6. Metering device (1) according to claim 5, the passage in the connection portion (23; 123) comprises a longitudinal duct (27; 127) and a transverse duct (26a; 126), said longitudinal duct opening on one side by said outlet opening (25; 125) and on the other side being connected to a side of the transverse duct, with the other side of the transverse duct opening by said inlet opening (24a).

7. Metering device (1) according to claim 6, wherein the passage in the connection portion (23) comprises a second inlet opening (24b) located between the upper stop (21) and the lower stop (22), the valve (20) being arranged in such a way that when the lower stop is in contact with the piston (10), the second inlet opening opens into the supply compartment (8), with the connection portion comprising a second transverse duct (26b) that opens on one side by this second inlet opening and being connected on the other side to the longitudinal duct (27), the through-hole (12) being centred on the piston, with the diameter (d) of the transverse and longitudinal ducts being close to a third of the value of the diameter (D) of the cylinder body (2).

8. Metering device (1) according to one of claims 3 to 6, wherein the through-hole (112) is offset on the piston (110) .

9. Metering device (1) according to one of claims 3 to 8, wherein the connection portion (23; 123) is formed as a single piece with the lower stop (22; 122), and wherein the valve (20; 120) comprises a closing part (29; 129) that comprises said upper stop (21; 121), said closing part also comprising a means of fastening (29a; 129a) said connection portion to this closing part.

10. Metering device (1) according to one of the preceding claims, wherein said piston (10; 110) comprises at least on the side of the supply compartment (8) a zone in the shape of a funnel (14; 114) that narrows towards the inlet of the passage (12; 112) in the piston.

11. Metering device (1) according to one of the preceding claims, when the piston (10; 110) comprises a magnetic material, means for generating (234, 232a, 232b, 233) a variation in a magnetic field along the length of the cylinder body (2) driving the movement of the piston, which drives the movement of the valve (20; 120) via said drive means (21, 22; 121, 122), wherein said means for generating (234, 232a, 232b, 233) a variation in a magnetic field include a magnet (233) outside of the metering chamber and movement means (234, 232a, 232b) of this magnet along the length of the cylinder body (2), with the movement of this magnet driving the variation of said magnetic field allowing for the movement of the valve (10; 110).

12. Machine for filling containers (70) comprising metering stations, with each metering station comprising a metering device (1) according to any of the preceding claims, with the filling machine comprising a carrousel (60) able to support containers, with the metering stations being distributed radially, the movement means of the valves of these metering stations comprising an electric motor (34; 234; 334) to actuate the movement of the corresponding valve (20; 120), with this machine being arranged in such a way that the filling of the containers can be done over a container travel that corresponds to an angular sector (α) in relation to the axis of rotation (Z) of the carrousel greater than 180°, in particular greater than 270°.
